# EUROPÄISCHE PATENTSCHRIFT

(11) **EP 0 678 952 B1**
(45) Veröffentlichungstag und Bekanntmachung des Hinweises auf die Patenterteilung: **26.08.1998**
(21) Anmeldenummer: 94110054.7
(22) Anmeldetag: 29.06.1994
(51) Int. Cl.: H02B 13/035

(54) **Trenner für eine metallgekapselte gasisolierte Hochspannungsschaltanlage**
Disconnector for a metal-clad gas-insulated high voltage switch installation
Sectionneur pour un appareillage de commutation blindé métallique à haute tension et à isolement gazeux

(30) Priorität: 19.04.1994 CH 1216/94
(43) Veröffentlichungstag der Anmeldung: 25.10.1995
(73) Patentinhaber: ASEA BROWN BOVERI AG, 5400 Baden (CH)
(72) Erfinder: Bleiker, Daniel, CH-8046 Zürich (CH); Forss, Sven, CH-3612 Steffisburg (CH); Schifko, Herbert, CH-8152 Glattbrugg (CH)

(56) Entgegenhaltungen:
- FR-A- 2 346 884
- FR-A- 2 629 283
- US-A- 5 001 599
- PATENT ABSTRACTS OF JAPAN vol. 2, no. 113 (E-058) 20. September 1978 & JP-A-53 079 242 (FUJI ELECTRIC) 13. Juli 1978

## Beschreibung

### TECHNISCHES GEBIET

Bei der Erfindung wird ausgegangen von einem Trenner für eine metallgekapselte gasisolierte Hochspannungsschaltanlage gemäss dem Oberbegriff des Anspruchs 1.

### STAND DER TECHNIK

Die Erfindung nimmt dabei Bezug auf einen Stand der Technik, wie er sich beispielsweise aus der Offenlegungsschrift DE-A1-42 10 545 ergibt. In dieser Veröffentlichung ist ein Trenner für eine metallgekapselte gasisolierte Hochspannungsschaltanlage beschrieben, mit zwei in der isoliergasgefüllten Metallkapselung angeordneten und längs einer Achse miteinander kontaktierbaren oder voneinander trennbaren Schaltstücken mit jeweils einem stiftförmigen, axial erstreckten Vorzündkontakt, welcher bei einem beider Schaltstücke als Nachlaufkontakt ausgebildet ist, und mit einem den Vorzündkontakt eines feststehenden beider Schaltstücke koaxial umgebenden Festkontakt und einem an einem beweglichen beider Schaltstücke vorgesehenen Laufkontakt, welcher in der Einschaltposition mit dem Festkontakt einen Dauerstrompfad bildet.

Dieser Trenner weist eine vergleichsweise grosse axiale Ausdehnung aus. Dies ist dadurch bedingt, dass sowohl die eigentliche Trennstrecke des Trenners als auch sämtliche bewegten Teile auf einer Achse liegen, die mit der Längsachse der stromführenden Aktivteile der gasisolierten Schaltanlage zusammenfällt. Zusätzlich wurden durch den Nachlaufkontakt Konstruktionselemente in das bewegliche Schaltstück eingebracht, welche in axialer Richtung eine erhebliche Ausdehnung besitzen und hochspannungsmässig abgeschirmt werden müssen. Dies führt zu einer nicht unerheblichen Vergrösserung der bereits zu einem wesentlichen Teil durch die Isolierdistanz der offenen Trennstrecke bestimmten Trennschaltergeometrie in axialer Richtung.

Die Patentanmeldung FR-A-2 346 884 zeigt eine metallgekapselte gasisolierte Hochspannungsschaltanlage mit einer Trenneranordnung bei welcher die Kontaktträger jeweils zwei aufwendig herzustellende Abwinklungen sowie zum Teil einen vergleichsweise grossen Abstand zur Längsachse der jeweiligen Sammelschiene aufweisen, sodass im Kurzschlussfall wegen dieser Abwinklungen in der Strombahn erhebliche elektrodynamische Kräfte auftreten.

Aus der Patentschrift US 5,001,599 ist eine metallgekapselte gasisolierte Hochspannungsschaltanlage mit stufenförmig versetzt angeordneten Sammelschienen bekannt. Diese Versetzung wird durch schräg zur Längsachse der metallgekapselten gasisolierten Hochspannungsschaltanlage angeordnete Schaltgeräte ausgeglichen. Diese schräg angeordneten Schaltgeräte in Verbindung mit den versetzt angeordneten Sammelschienen verursachen eine nachteilige Volumenvergrösserung dieser Hochspannungsschaltanlage.

Die in der Patentanmeldung FR-A-2 629 283 gezeigte metallgekapselte gasisolierte Hochspannungsschaltanlage weist versetzt angeordnete Sammelschienen auf, die zum Teil mit hochspannungstechnisch bedingten Abkröpfungen versehen sind.

### KURZE DARSTELLUNG DER ERFINDUNG

Der Erfindung, wie sie in Patentanspruch 1 definiert ist, liegt die Aufgabe zugrunde, einen Trenner für eine metallgekapselte gasisolierte Hochspannungsschaltanlage der eingangs genannten Art anzugeben, dessen Abmessungen in axialer Richtung vergleichsweise gering sind.

Der Trenner ist für eine metallgekapselte gasisolierte Hochspannungsschaltanlage vorgesehen. Er weist zwei in einem eine Längsachse aufweisenden, isoliergasgefüllten Gehäuse angeordnete Kontaktträger, mit einem als Trennstrecke ausgelegten Abstand zwischen einander gegenüber liegenden Oberflächen der beiden Kontaktträger auf. Der Trenner ist mit einer längs einer Betätigungsachse beweglichen Kontaktanordnung versehen, die im eingeschalteten Zustand des Trenners den Abstand elektrisch leitend überbrückt. Eine besonders in axialer Richtung platzsparende Trenneranordnung wird dadurch erreicht, dass die Längsachse des Gehäuses und die Betätigungsachse des Trenners miteinander einen ersten Winkel bilden, und dass die Oberflächen der beiden Kontaktträger im Bereich der Trennstrecke parallel zueinander verlaufen und gegenüber der Längsachse um einen zweiten Winkel abgewinkelt sind.

Besonders günstige Trennerausführungen ergeben sich, wenn die Winkelsumme des ersten Winkels und des zweiten Winkels einen Wert von 90° ergibt. Dabei kann der zweite Winkel in einem Bereich von 25° bis 35°, vorzugsweise jedoch bei 30° liegen.

Die Oberflächen der beiden Kontaktträger weisen im Bereich der Trennstrecke gegenüber der Betätigungsachse des Trenners einen dritten Winkel auf. Wird der dritte Winkel als rechter Winkel ausgebildet, so ergibt sich eine zweckmässige Ausführungsform des Trenners.

Eine besonders kurze Baugruppe ergibt sich daraus, dass in dem Gehäuse beidseitig der Trennstrecke je mindestens eine Einbaumöglichkeit für einen eine Einbauachse aufweisenden Erder vorgesehen ist.

Als besonders vorteilhaft erweist es sich zudem, dass die Abschirmung der beweglichen Kontaktanordnung nun die axiale Baulänge des Trenners nicht mehr vergrössert.

Die offene Trennstrecke des Trenners ist mittels SF₆ höchstzuverlässig isoliert. Der Trenner weist im geschlossenen Zustand eine optimale Nennstromtragfähigkeit, eine sehr gute Kurzschlussstromtragfähigkeit und Stossstromfestigkeit auf. Ferner weist er ein zuverlässiges Schaltvermögen bei kleinen kapazitiven Strömen auf, er beherrscht zudem das Umschalten bei einem unterbrechungslosen Sammelschienenwechsel.

Der Trenner weist getrennte Kontaktsysteme für die Dauerstromführung und für den eigentlichen Schaltvorgang auf. Die Dauerstromkontakte sind einfach und zuverlässig konstruiert, sie weisen eine minimale Anzahl von Einzelteilen auf. Die Kontaktbewegung erfolgt mittels eines elektrisch betriebenen, ausserhalb des mit SF₆-Gas gefüllten Trennergehäuses angeordneten Trennerantriebs, der Trenner kann jedoch auch von Hand angetrieben werden. Eine derartige Konfiguration erleichtert die Wartungsarbeiten sehr vorteilhaft. Der Trenner ist mit einer mechanisch gekoppelten Stellungsanzeige versehen, ferner kann ein Schauglas vorgesehen werden für ein Endoskop zur Kontrolle der Position der Kontakte.

Weitere Ausführungsbeispiele der Erfindung und die damit erzielbaren Vorteile werden nachfolgend anhand der Zeichnung, welche lediglich einen möglichen Ausführungsweg darstellt, näher erläutert.

### KURZE BESCHREIBUNG DER ZEICHNUNG

Es zeigen:
Fig.1 eine Seitenansicht eines Abgangsfeldes einer gasisolierten Schaltanlage mit einem eingebauten Trenner nach der Erfindung,
Fig.2 eine Ansicht eines Gehäuses eines erfindungsgemässen Trenners, und
Fig.3 einen stark vereinfachten Schnitt durch einen erfindungsgemässen Trenner.

Bei allen Figuren sind gleich wirkende Elemente mit gleichen Bezugszeichen versehen. Alle für das unmittelbare Verständnis der Erfindung nicht erforderlichen Elemente sind nicht dargestellt.

### WEGE ZUR AUSFÜHRUNG DER ERFINDUNG

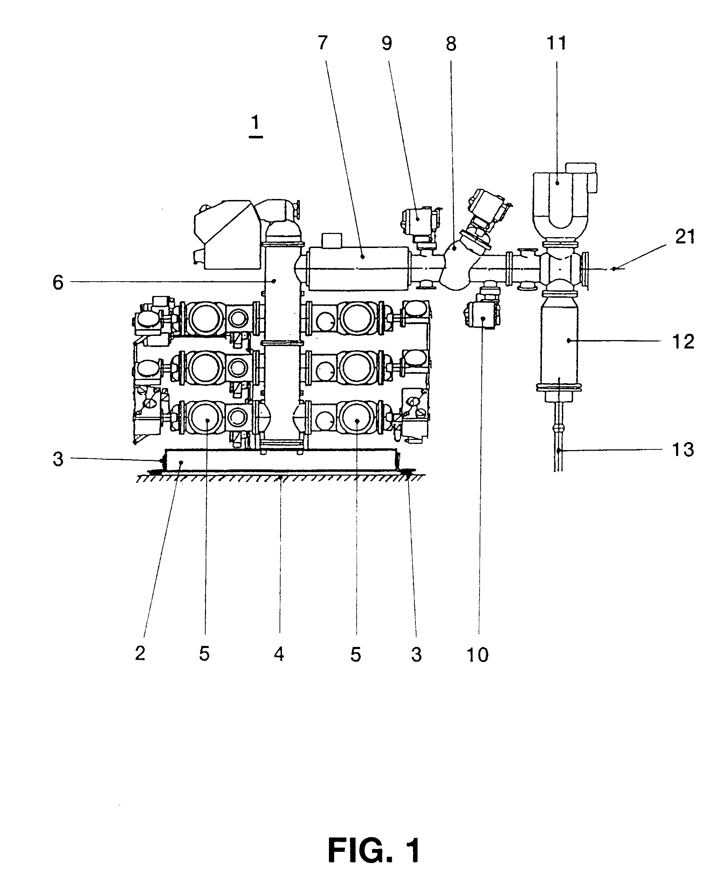

Die Fig.1 zeigt eine schematisch dargestellte Seitenansicht eines Abgangs feldes 1 einer metallgekapselten gasisolierten Schaltanlage. Dieses Abgangsfeld 1 weist einen Tragrahmen 2 auf, der aus einem Metallprofil gefertigt ist. An den Ecken des Tragrahmens 2 sind Winkelprofile 3 angebracht, welche der Verbindung des Tragrahmens 2 mit einem Fundament 4 dienen. Diese Verbindung kann kraftschlüssig ausgebildet sein, sie kann jedoch auch ein Gleiten des Tragrahmens 2 auf einer in das Fundament 4 eingelassenen und hier nicht dargestellten Tragschiene zulassen. Bei diesem Typ einer metallgekapselten gasisolierten Schaltanlage sind die Sammelschienen 5 senkrecht übereinander an einer oder an beiden Seiten der senkrecht gestellten Leistungsschalter 6 angeordnet. Der Abgang ist mit einem Stromwandler 7 versehen, dem ein Trenner 8 nachgeschaltet ist. An beiden Seiten des Trenners 8 ist hier jeweils ein Erder 9,10 in das Gehäuse des Trenners 8 eingebaut. Nach dem Trenner 8 ist ein Spannungswandler 11 vorgesehen. Ein Kabelanschluss 12 verbindet das abgehende Hochspannungskabel 13 mit der gasisolierten Schaltanlage. Die Sammelschienen 5 weisen jeweils eine Längsachse auf. Die Längsachsen eines jeden der beiden Sammelschienensysteme liegen in einer Ebene senkrecht übereinander.

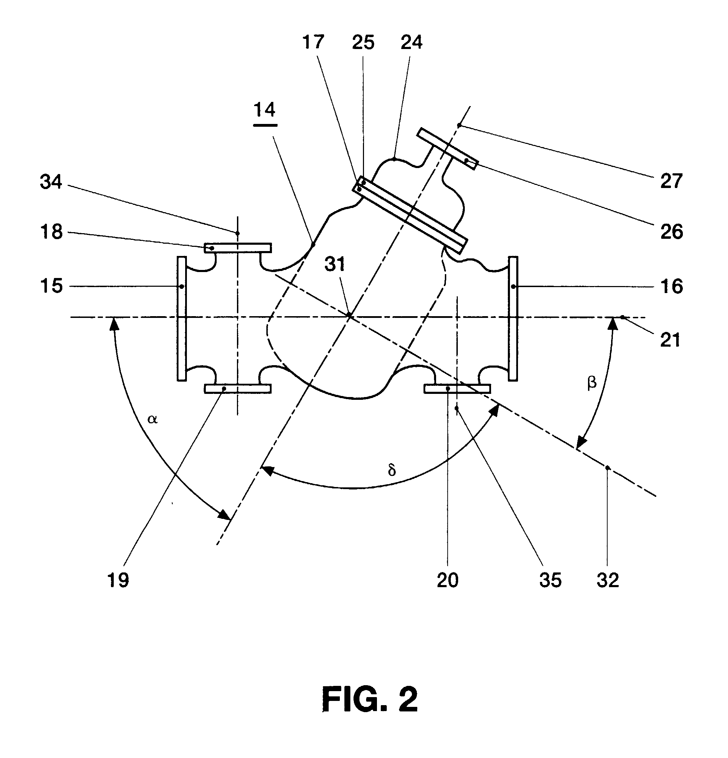

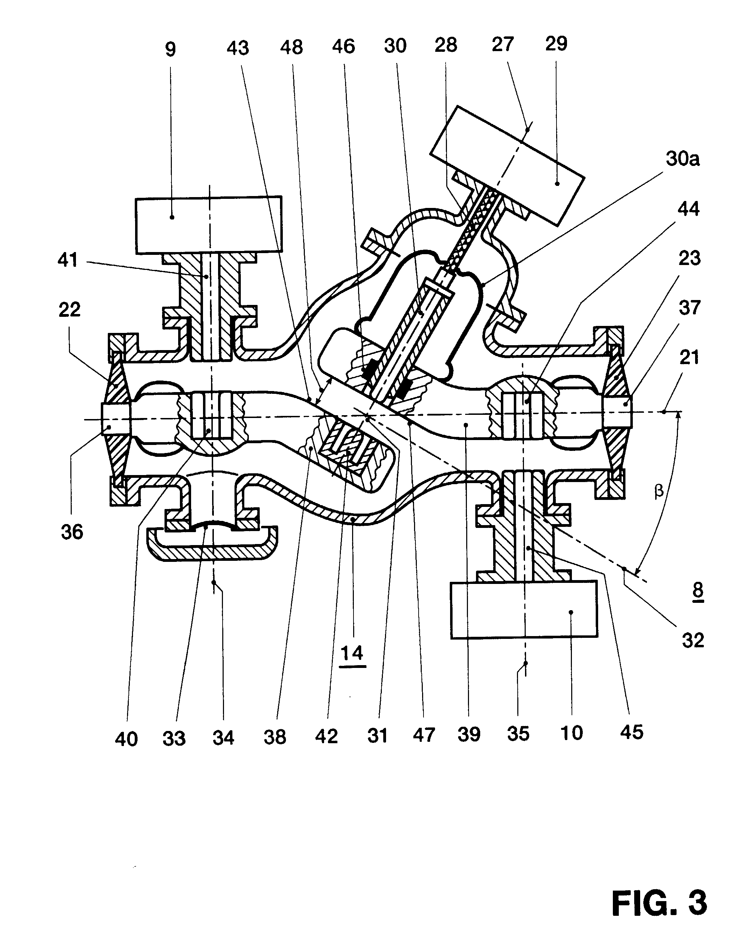

Das in Fig.2 separat und vereinfacht dargestellte Gehäuse 14 des Trenners 8 weist eine Wandung aus Metall auf. In der Regel wird das Gehäuse 14 druckdicht aus einer Aluminiumlegierung gegossen. Das Gehäuse 14 weist sechs mit Flanschen 15 bis 20 versehene Öffnungen auf. Das Gehäuse 14 weist zudem eine Längsachse 21 auf, welche gleichzeitig die Mittelachse der in das Gehäuse 14 einmündenden Aktivteile der gasisolierten Schaltanlage darstellt. Die mit den Flanschen 15 und 16 versehenen Öffnungen werden bei der Trennermontage mit jeweils einem Schottungsisolator 22,23 gasdicht verschlossen, wie dies in Fig.3 schematisch dargestellt ist. Die mit dem Flansch 17 versehene Öffnung wird bei der Trennermontage mit einer metallischen Abdeckung 24 versehen, die einen Flansch 25 aufweist, der mit dem Flansch 17 gasdicht verschraubt wird. Gegenüber dem Flansch 25 ist an der Abdeckung 24 ein weiterer Flansch 26 angebracht. Der Flansch 26 dient der Befestigung einer druckfesten Durchführung für eine bei einem Schaltvorgang des Trenners 8 in Richtung einer Betätigungsachse 27 bewegbaren Isolierstoffstange 28. Die Isolierstoffstange 28 bewegt, durch einen ebenfalls mit dem Flansch 26 verbundenen Trennerantrieb 29 angetrieben, die, stark schematisiert dargestellte bewegliche Kontaktanordnunq 30 des Trenners 8. Die bewegliche Kontaktanordnung 30 ist von einer dielektrisch wirksamen Abschirmung 30a umgeben, die von der Isolierstoffstange 28 durchdrungen wird. Die Längsachse 21 und die Betätigungsachse 27 liegen in einer Ebene und sie schneiden sich unter einem Winkel α. Der Winkel α ist hier mit 60° ausgeführt. Durch die Schnittstelle 31 der Längsachse 21 mit der Betätigungsachse 27 führt eine weitere Achse 32, die mit der Betätigungsachse 27 einen Winkel δ bildet, der hier als rechter Winkel ausgebildet ist. Die Achse 32 bildet mit der Längsachse 21 einen Winkel β. Der Winkel β ist hier mit 30° ausgeführt. Es sind auch andere Winkel β möglich, wenn die übrigen Winkel entsprechend modifiziert werden, ein Winkelbereich von 25° bis 35° für diesen Winkel β lässt sich sinnvoll realisieren. Es wirkt sich bezüglich der Anordnung des Trenners 8 vorteilhaft aus, wenn die Winkelsumme des Winkels a und des Winkels β 90° ergibt.

Die mit den Flanschen 18 und 19 versehenen Öffnungen sind für den wahlweisen Einbau eines Erders 9 vorgesehen, dabei kann der Erder 9 entweder, wie in Fig.1 gezeigt, oberhalb des Gehäuses 14 eingebaut werden oder auch unterhalb, wenn es das Konzept der gasisolierten Schaltanlage erfordern sollte. An den verbleibenden der beiden Flansche 18,19 können beispielsweise Detektoren für die Überwachung der gasisolierten Schaltanlage oder, wie in Fig.3 gezeigt, eine Berstscheibe 33 druckdicht angeflanscht werden, die im Fehlerfall eine Druckentlastung des Gehäuses 14 ermöglicht. Die beiden Flansche 18,19 weisen eine gemeinsame Einbauachse 34 auf. Der Flansch 20 ist ebenfalls für den druckdichten Einbau eines Erders 10 vorgesehen, der sich entlang einer Einbauachse 35 erstreckt. Die beiden Einbauachsen 34,35 liegen hier in einer Ebene mit der Betätigungsachse 27, was eine besonders platzsparende Anordnung ergibt. Für besondere Anwendungen können die erwähnten Achsen auch in verschiedenen Ebenen liegen.

Der Schnitt durch einen erfindungsgemässen Trenner gemäss Fig.3 zeigt stark vereinfacht die Aktivteile des Trenners 8. Durch die Schottungsisolatoren 22,23 ist jeweils einer von zwei auf Hochspannungspotential bringbaren und gegenüber der Metallkapselung der gasisolierten Schaltanlage potentialmässig abgeschirmten Stromanschlüsse 36,37 geführt. Der Stromanschluss 36 ist mit einem ersten feststehenden Kontaktträger 38 des Trenners 8 elektrisch leitend verbunden. Der Stromanschluss 37 ist mit einem zweiten feststehenden Kontaktträger 39 des Trenners 8 elektrisch leitend verbunden. Die Kontaktträger 38,39 sind aus mehreren, hier nicht dargestellten Komponenten zusammengefügt.

Die Kontaktträger 38,39 sind dielektrisch günstig ausgeformt, etwaige Kanten sind mit Abschirmungen versehen. In den Kontaktträger 38 ist ein tulpenförmig ausgebildeter Gegenkontakt 40 eingelassen, der konzentrisch zur Einbauachse 34 angeordnet ist und der den Kontaktstift 41 des Erders 9 aufnimmt, wenn der Erder 9 geschlossen wird. Ferner ist in den Kontaktträger 38 der feststehende Kontakt 42 des Trenners 8 eingelassen, der konzentrisch zur Betätigungsachse 27 angeordnet ist. Der Kontaktträger 38, ist nach dem Stromanschluss 36 zunächst konzentrisch zur Längsachse 21 angeordnet, der daran anschliessende Teil des Kontaktträgers 38 ist so abgewinkelt, dass er sich, wie in Fig.3 gezeigt, etwas nach unterhalb der Längsachse 21 erstreckt. Eine Oberfläche 43 dieses abgewinkelten Teiles erstreckt sich senkrecht zur Betätigungsachse 27. In den Kontaktträger 39 ist ein tulpenförmig ausgebildeter Gegenkontakt 44 eingelassen, der konzentrisch zur Einbauachse 35 angeordnet ist und der den Kontaktstift 45 des Erders 10 aufnimmt, wenn der Erder 10 geschlossen wird. Ferner ist in den Kontaktträger 39 ein Gleitkontakt 46 eingelassen, der für den Stromübergang von der beweglichen Kontaktanordnung 30 des Trenners 8 auf den Kontaktträger 39 vorgesehen ist. Der Gleitkontakt 46 ist konzentrisch zur Betätigungsachse 27 angeordnet, er ist mit Kontaktfingern, mit Kontaktlamellen oder mit Spiralkontakten versehen. Der Kontaktträger 39 ist nach dem Stromanschluss 37 zunächst konzentrisch zur Längsachse 21 angeordnet, der daran anschliessende Teil des Kontaktträgers 39 ist so abgewinkelt, dass er sich, wie in Fig.3 gezeigt, etwas nach oberhalb der Längsachse 21 erstreckt. Eine Oberfläche 47 dieses abgewinkelten Teiles erstreckt sich senkrecht zur Betätigungsachse 27 des Trenners 8. Die beiden Oberflächen 43 und 44 verlaufen parallel zueinander in einem Abstand 48, sie sind um den Winkel β gegen die Längsachse 21 geneigt. Die Oberflächen 43 und 44 gehen mit zunehmendem Abstand von der Betätigungsachse 27 in stark abgerundete Bereiche über. Dieser Abstand 48 entspricht der Trennstrecke des Trenners 8, die im Betrieb allen an dieser Stelle auftretenden betriebsbedingten Spannungsbeanspruchungen standhält.

Beim Einschalten des Trenners 8 wird durch die durch den Trennerantrieb 29 betätigte Isolierstoffstange 28 die bewegliche Kontaktanordnung 30 entlang der Betätigungsachse 27 auf den feststehenden Kontakt 42 zu bewegt. Eine gegebenenfalls durch Restladungen und/oder durch eine zwischen den Kontaktträgern 38,39 anliegende betriebsfrequente Spannung hervorgerufene Vorzündung zwischen der beweglichen Kontaktanordnung 30 und dem feststehenden Kontakt 42 wird durch den Trenner 8 einwandfrei beherrscht. Eine Ausweitung des Vorzündlichtbogens hin zur Wand des Gehäuses 14 kann, bedingt durch die geometrische Anordnung der Kontaktträger 38,39, nicht auftreten. Der Trennerantrieb 29 ist so ausgelegt, dass er in jedem möglichen Betriebsfall die bewegliche Kontaktanordnung 30 sicher in die vorgesehene Einschaltstellung bewegt, sodass eine einwandfreie Stromführung über die dafür vorgesehenen, nicht näher beschriebenen Nennstromkontakte gewährleistet ist. Ebenso erfolgt auch das Öffnen des Trenners 8 stets einwandfrei.

Der Trenner 8 kann in jeder beliebigen Einbaulage eingebaut werden, die durch das Anlagenkonzept der metallgekapselten gasisolierten Schaltanlage vorgegeben wird. Die Erder 9,10 können ebenfalls lageunabhängig betätigt werden, sodass auch von daher keine Einbaubeschränkungen bestehen. Die Erder 9,10 können sowohl als Arbeitserder als auch als Schnellerder ausgebildet sein. Die Baugruppe Trenner 8 mit vor- und nachgeschalteten Erdern 9,10 ist sehr kompakt ausgeführt und beansprucht in axialer Richtung besonders wenig Platz, sodass das Schaltfeld mit besonders kleinen Abbmessungen ausgeführt werden kann.

Abknickungen in der Strombahn der gasisolierten Schaltanlage haben zur Folge, dass an diesen Stellen im Fall des Auftretens von hohen Fehlerströmen, insbesondere von Stosskurzschlussströmen, hohe elektrodynamische Kräfte in der Strombahn auftreten. Die im Trenner 8 vorgesehenen abgewinkelten Kontaktträger 38,39 verursachen eine derartige Abknickung in der Strombahn. Dank der elektrodynamisch günstigen Ausbildung der Kontaktträger 38,39 in Verbindung mit dem zu ihnen bei geschlossenem Trenner 8 rechtwinklig angeordneten Nennstromkontakt der beweglichen Kontaktanordnung 30 kann die Abweichung der effektiven Strombahn von dem idealen Verlauf entlang der Längsachse 21 vergleichsweise klein gehalten werden. Diese kleine Abweichung hat zur Folge, dass die auf die Kontaktträger 38,39 bei elektrodynamischer Belastung einwirkenden Biegemomente vergleichsweise klein gehalten werden können, sodass die die Kontaktträger 38,39 tragenden Schottungsisolatoren 22,23 ohne zusätzliche Verstärkung diese Momente aufnehmen können.

Es ist auch vorstellbar, bei einer weiteren Trennerausführung den Winkel β gegen Null gehen zu lassen, allerdings müssten dann die Kontaktträger 38,39 entsprechend abgekröpft ausgebildet werden. Wenn der Winkel β den Wert Null annimmt, steht die Betätigungsachse 27 des Trenners 8 senkrecht auf der Längsachse 21 des Gehäuses 14, und die Oberflächen 43 und 47 verlaufen parallel zur Längsachse 21. Eine derartige Konfiguration der Kontaktträger 38,39 bedingt zwar etwas grössere Gehäusedurchmesser, sie kann sich jedoch für besondere Anwendungen als sinnvoll erweisen.

### BEZEICHNUNGSLISTE

- 1: Abgangsfeld
- 2: Tragrahmen
- 3: Winkelprofil
- 4: Fundament
- 5: Sammelschienen
- 6: Leistungsschalter
- 7: Stromwandler
- 8: Trenner
- 9,10: Erder
- 11: Spannungswandler
- 12: Kabelanschluss
- 13: Hochspannungskabel
- 14: Gehäuse
- 15 bis 20: Flansch
- 21: Längsachse
- 22,23: Schottungsisolator
- 24: Abdeckung
- 25,25: Flansch
- 27: Betätigungsachse
- 28: Isolierstoffstange
- 29: Trennerantrieb
- 30: bewegliche Kontaktanordnung
- 30a: Abschirmung
- 31: Schnittstelle
- 32: Achse
- 33: Berstscheibe
- 34,35: Einbauachse
- 36,37: Stromanschlüsse
- 38,39: Kontaktträger
- 40: Gegenkontakt
- 41: Kontaktstift
- 42: feststehender Kontakt
- 43: Oberfläche
- 44: Gegenkontakt
- 45: Kontaktstift
- 46: Gleitkontakt
- 47: Oberfläche
- 48: Abstand
- α, β, δ: Winkel

## Patentansprüche

1. Trenner für eine metallgekapselte gasisolierte Hochspannungsschaltanlage, welche spannungsbeaufschlagte, entlang einer Längsachse (21) (eines Isoliergasgefüllten gehaüses) erstreckte Aktivteile aufweist, mit zwei Kontaktträgern (38,39), von denen jeweils ein erster Abschnitt entlang der Längsachse (21) erstreckt angeordnet ist und ein daran anschliessender zweiter Abschnitt gegen die Längsachse (21) abgewinkelt ist, mit einem als Trennstrecke ausgelegten Abstand (48) zwischen einander parallel gegenüberliegenden Oberflächen (43,47) der beiden Kontaktträger (38,39), mit einer längs einer Betätigungsachse (27) beweglichen Kontaktanordnung (30), die im eingeschalteten Zustand des Trenners (8) den als Trennstrecke ausgelegten Abstand (48) elektrisch leitend überbrückt, wobei die Längsachse (21) und die Betätigungsachse (27) unter einem ersten Winkel (α) auf einander treffen, dadurch gekennzeichnet,
- dass die einander parallel gegenüberliegenden Oberflächen (43,47) jeweils auf je einem an den ersten Abschnitt anschliessenden Teil des zweiten Abschnitts angeordnet sind, und
- dass diese Oberflächen (43,47) gegenüber der Längsachse (21) um einen zweiten Winkel (β) abgewinkelt sind.

2. Trenner nach Anspruch 1, dadurch gekennzeichnet,
- dass die Winkelsumme des ersten Winkels (α) und des zweiten Winkels (β) 90° ergibt.

3. Trenner nach Anspruch 2, dadurch gekennzeichnet,
- dass der zweite Winkel (β) in einem Bereich von 25° bis 35°, vorzugsweise jedoch bei 30° liegt.

4. Trenner nach einem der Ansprüche 1 bis 3, dadurch gekennzeichnet,
- dass die Längsachse (21) und die Betätigungsachse (27) in einer Ebene liegen.

5. Trenner nach einem der Ansprüche 1 bis 4, dadurch gekennzeichnet,
- dass die Oberflächen (43,47) der beiden Kontaktträger (38,39) im Bereich der Trennstrecke gegenüber der Betätigungsachse (27) des Trenners (8) um einen dritten Winkel (6) geneigt sind.

6. Trenner nach Anspruch 5, dadurch gekennzeichnet,
- dass der dritte Winkel (δ) als rechter Winkel ausgebildet ist.

7. Trenner nach einem der Ansprüche 1 bis 6, dadurch gekennzeichnet,
- dass in dem Gehäuse (14) beidseitig der Trennstrecke je mindestens eine Einbaumöglichkeit für einen eine Einbauachse (34,35) aufweisenden Erder (9,10) vorgesehen ist.

8. Trenner nach Anspruch 7, dadurch gekennzeichnet,
- dass die Einbauachsen (34,35) senkrecht zur Längsachse (21) stehen.

9. Trenner nach Anspruch 8, dadurch gekennzeichnet,
- dass die Einbauachsen (34,35) der Erder (9,10) in einer Ebene mit der Betätigungsachse (27) liegen.

## Claims

1. Isolator for a metal-encapsulated, gasinsulated high-voltage switching installation which has active parts which are live and extend along a longitudinal axis (21) of an enclosure filled with insulating gas, having two contact supports (38, 39) of which, in each case, a first section is arranged extended along the longitudinal axis (21) and an adjoining, second section is bent towards the longitudinal axis (21), having a separation (48), which is designed as an isolating gap between mutually parallel, opposite surfaces (43, 47) of the two contact supports (38, 39), having a contact arrangement (30) which moves along an operating axis (27) and electrically conductively shorts the separation (48), designed as an isolating gap, when the isolator (8) is in the connected state, the longitudinal axis (21) and the operating axis (27) meeting one another at a first angle (α), characterized
- in that the mutually parallel, opposite surfaces (43, 47) are each arranged on a part of the second section adjoining the first section, and
- in that these surfaces (43, 47) are bent through a second angle (β) with respect to the longitudinal axis (21).

2. Isolator according to Claim 1, characterized in that
- the angular sum of the first angle (α) and of the second angle (β) is 90°.

3. Isolator according to Claim 2, characterized in that
- the second angle (β) is in a range from 25° to 35°, but is preferably 30°.

4. Isolator according to one of Claims 1 to 3, characterized in that
- the longitudinal axis (21) and the operating axis (27) are in a plane.

5. Isolator according to one of Claims 1 to 4, characterized in that
- the surfaces (43, 47) of the two contact supports (38, 39) are inclined at a third angle (6), in the region of the isolating gap, to the operating axis (27) of the isolator (8).

6. Isolator according to Claim 5, characterized in that
- the third angle (δ) is designed as a right angle.

7. Isolator according to one of Claims 1 to 6, characterized in that
- at least one installation option for an earthing switch (9, 10), which has an installation axis (34, 35), is in each case provided in the enclosure (14), on both sides of the isolating gap.

8. Isolator according to Claim 7, characterized in that
- the installation axes (34, 35) are at right angles to the longitudinal axis (21).

9. Isolator according to Claim 8, characterized in that
- the installation axes (34, 35) of the earthing switches (9, 10) are in a plane with the operating axis (27).

## Revendications

1. Sectionneur pour un appareillage de commutation blindé métallique à haute tension et à isolement gazeux, lequel présente des parties actives sous tension s'étendant le long d'un axe longitudinal (21) d'un boîtier rempli de gaz isolant, muni de deux supports de contact (38, 39), une première section de chacun s'étendant le long de l'axe longitudinal (21) et une deuxième section qui vient s'y raccorder étant pliée par rapport à l'axe longitudinal (21), avec un écart (48) conçu comme une section de séparation entre les surfaces (43, 47) parallèles l'une à l'autre des deux supports de contact (38, 39), avec un arrangement de contact mobile (30) le long d'un axe de manoeuvre (27) qui court-circuite électriquement l'écart (48) conçu comme une section de séparation lorsque le sectionneur (8) est enclenché, l'axe longitudinal (21) et l'axe de manoeuvre (27) se croisant en formant un premier angle (α), caractérisé par le fait
- que les surfaces (43, 47) parallèles l'une à l'autre sont chacune disposées sur une partie de la deuxième section venant se raccorder à la première section, et
- que ces surfaces (43, 47) sont pliées par rapport à l'axe longitudinal (21) selon un deuxième angle (β).

2. Sectionneur selon la revendication 1, caractérisé par le fait que la somme angulaire du premier angle (α) et du deuxième angle (β) donne une valeur de 90°.

3. Sectionneur selon la revendication 2, caractérisé par le fait que le deuxième angle (β) peut être compris entre 25° et 35°, de préférence cependant égal à 30°.

4. Sectionneur selon l'une des revendications 1 à 3, caractérisé par le fait que l'axe longitudinal (21) et l'axe de manoeuvre (27) se trouvent dans un même plan.

5. Sectionneur selon l'une des revendications 1 à 4, caractérisé par le fait que les surfaces (43, 47) des deux supports de contact (38, 39) sont inclinées selon un troisième angle (δ) dans la zone de la section de séparation par rapport à l'axe de manoeuvre (27) du sectionneur (8).

6. Sectionneur selon la revendication 5, caractérisé par le fait que l'angle (δ) est un angle droit.

7. Sectionneur selon l'une des revendications 1 à 6, caractérisé par le fait qu'au moins une possibilité de montage d'une prise de terre (9, 10) présentant un axe de montage (34, 35) est prévue dans le boîtier (14) des deux côtés de la section de séparation.

8. Sectionneur selon la revendication 7, caractérisé par le fait que les axes de montage (34, 35) sont perpendiculaires à l'axe longitudinal (21).

9. Sectionneur selon la revendication 8, caractérisé par le fait que les axes de montage (34, 35) des prises de terre (9, 10) se trouvent dans un même plan que l'axe de manoeuvre (27).
